# EUROPEAN PATENT APPLICATION

(11) **EP 1 880 596 A1**
(43) Date of publication of application: **23.01.2008**
(21) Application number: 06253791.5
(22) Date of filing: 20.07.2006
(51) Int. Cl.: A01G 31/00

(54) **Growth substrates, their production and their use**

(71) Applicant: Rockwool International A/S, 2640 Hedehusene (DK)
(72) Inventor: The designation of the inventor has not yet been filed
(74) Representative: Samuels, Lucy Alice

(57) **Abstract**

The invention provides a mineral wool growth substrate comprising binder and wetting agent, characterised in that the wetting agent comprises ionic surfactant and is present in an amount of from 0.05 to 0.75%, by weight based on growth substrate.

## Description

The invention relates to mineral wool growth substrates. The mineral wool growth substrate comprises a binder, often a hydrophobic binder, to provide structural integrity, and a wetting agent which provides water handling characteristics. The invention also relates to the use of such a mineral wool growth substrate for growing plants, and to the production of such growth substrates.

It has been well known for many years to grow plants in growth substrates formed from mineral wool. Mineral wool products which are provided as a coherent plug, block, slab or mat generally include a binder, usually an organic binder, in order to provide structural integrity to the product and such binders are commonly hydrophobic once cured. This allows the growth substrate to retain its structure during water irrigation. However, mineral wool products which are to be used as growth substrates must have a capacity to take up and hold water, which is routinely supplied by an irrigation system to the growth substrate, and re-wetting properties. Accordingly, it has been well known for some years to include a wetting agent in mineral wool products which are to be used as growth substrates.

One early example of this is GB-A-1336426, which describes readily wettable mineral wool products suitable for use as growth substrates. To provide structure and shape, the fibres contain a binder such a phenol formaldehyde resin or urea formaldehyde resin. To provide the required water holding characteristics the product also contains a wetting agent, in an amount of up to 2% by wt based on the mineral wool. General classes of wetting agents are mentioned, such as anionic and cationic wetting agents, but non-ionic wetting agents are said to be preferred. Examples are alkyl polyglycol ethers such as Triton CF10 and Lissapol N. These are said to be especially valuable where the growth substrate must be subjected to elevated temperatures in order to cure the binder, as they retain adequate wetting properties even after being subjected to temperatures of 200°C or greater. In cases where the wetting agent is not subjected to elevated temperatures, a wider variety of materials is suggested, including lauryl alcohol. Generally the product is said to be in the form of sheets which can have thickness greater than 1cm. An example is given of slabs of thickness 5cm containing cured binder and Triton CF10 wetting agent.

Subsequent publications, and the commercial field itself, have generally followed this preferred approach. For instance, EP-A-889175, DE-A-4208733, WO 92/04824 and DE-A-4024727 all describe systems in which a wetting agent/surfactant is included in the mineral wool growth substrate. In these cases, the nature of the wetting agent is either unspecified or is stated to be a non-ionic material, as in GB-A-1336426. In commercial practice levels of up to 3% non-ionic surfactant are normally used.

Whilst the inclusion of binder and wetting agent as described in GB-A-1336426 is generally very helpful, it has certain problems. The first is that the water handling capabilities of the substrate, although good, show room for improvement. Thus, it would be desirable to provide systems which show improved re-saturation properties (ability of the growth substrate to take up water a second time once it has been wetted and then dried), improved water distribution properties (ability of the growth substrate to hold water at a more uniform concentration throughout the height of the growth substrate rather than concentrating at the base), and water retention.

Additionally, one problem which tends to arise with the non-ionic surfactants which have conventionally been used is that they are, during irrigation of the growth substrate, gradually lost from the growth substrate rather than being retained in the mineral wool structure. This means that the wettability properties of the growth substrate gradually decrease over time. This can have an impact on, for instance, the re-saturation properties and also on the water handling properties of a substrate which has been in place for a considerable time, and thus on the performance of the plant and growing process.

Accordingly, there have been other attempts in the art to deal with the problem of providing a mineral wool growth substrate which contains binder material to provide structural integrity but which also has appropriate wettability properties. Examples include the publications EP-A-889175, DE-A-4208733, WO 92/04824 and DE-A-4024727 mentioned above, as well as CA-A-2301248, WO 97/07664 and WO 99/38372, which address the problem by providing specific binders which can provide both structural and wettability properties. CA-A-2301248 discloses a substrate which additionally comprises surfactant.

These latter two approaches, whilst having advantages, in particular the advantage that the wetting agent is not lost during irrigation, necessitate the use of a rather specific and potentially expensive binder material. Further, there is still room for improvement in their water handling properties.

Accordingly, it is still, despite the many years during which the industry has used mineral wool materials as growth substrates, an aim to provide materials which exhibit excellent water distribution properties and water retention properties, and which maintain these properties over time, during use, and thus can exhibit excellent re-saturation properties. It is desirable to achieve this in a manner such that in use the product exhibits homogeneity between units, between batches of units and within the volume of a single unit. It is also desirable to achieve this in the context of a product which has good structural integrity and can be made in conventional manner.

EP-A-1226749 discloses a process for the production of water-absorbing mineral fibre products, which can be used for growing plants. According to this process, during production of the fibres, material is applied to the fibres after formation and before collection, comprising binder, wetting agent and aliphatic polyol. The binder can be a conventional phenol-based resin. The polyol can preferably be ethylene glycol, propylene glycol or trimethylolpropane. The wetting agent can be selected from a long list including salts of higher fatty acids, alkyl or aralkyl sulphates or sulphonates, fatty alcohol sulphates, alkyl phosphates, fatty alcohol ethoxylates, alkyl phenol ethoxylates, fatty amine ethoxylates, fatty acid ethoxylates, alkyl ammonium compounds. Alkyl benzene sulphonate is said to be preferred. No reason is given for this preference.

Amounts of wetting agent in the final product are discussed only in general terms. It is stated that they may be present in amounts up to 3% based on the final mineral wool product.

However, we have found, firstly, that particular types of surfactant provide surprisingly improved water handling properties over the conventional systems, something which is not suggested in EP-A-1226749, and that these particular types of surfactant give good results at particular low levels, based on the mineral wool growth substrate. This is believed to be associated with the formation taken up by this particular type of surfactant on the surfaces of the mineral wool fibres.

According to the invention, in a first aspect we provide a mineral wool growth substrate formed of a matrix of mineral wool, the substrate comprising binder and wetting agent, characterised in that the wetting agent comprises ionic surfactant in an amount of from 0.05 to 0.75% by weight based on weight of growth substrate.

We find that this particular combination of binder and ionic surfactant, especially anionic surfactant such as linear alkyl benzene sulphonate surfactant, provides a surprisingly effective combination of water handling properties. In particular, water handling properties are consistently better in all respects than a combination of binder and conventional non-ionic based wetting agent. They are even better in particular respects than the system of the type described in WO 99/38372 which uses a specific hydrophilic binder system.

Particular benefits are seen in water distribution properties, especially in comparison with this type of hydrophilic binder system, which prior to the invention had provided the highest standard of water distribution. Water distribution properties are especially important when a block of mineral wool substrate having relatively large height is used, because it is such materials which suffer most from problems of water concentrating in the lower regions of the substrate (so there is too much water at the bottom and too little at the top).

Furthermore, the choice of ionic, especially anionic surfactant, especially linear alkyl benzene sulphonate (LAS), appears to lead to greatly reduced loss of wetting agent during irrigation and consequently minimises foaming problems during the irrigation process. LAS also has the advantage of being aerobically biodegradable in water.

Physical properties of the growth substrate remain good and there is no apparent plant toxicity problem.

In the case of anionic surfactants such as LAS it is believed that the defined amounts lead to formation of a multiple monolayer structure on the surface of the fibres which contributes to the combination of water handling properties, physical properties and low plant toxicity. In particular a robust product is obtained which shows good homogeneity. Homogeneity is the term used in the growth substrate art to denote the uniformity of the behaviour of a product of, nominally, a single composition, over a large volume of the product - either within a single coherent block or over a series of discrete blocks or across batches of units. Thus, in the invention, minor production variations do not lead to significant variation in water handling properties of the product.

The growth substrate is a block of mineral wool, which can be glass wool or slag wool but is usually stone wool. In general it can be any of the types of man-made vitreous fibre which are conventionally known for production of growth substrates. Fibre diameter is often in the range 3 to 20 microns, usually 5 to 10 microns, as conventional.

Density of the block of growth substrate can be up to 300 kg/m³ but is generally in the range 10 to 150 kg/m³, often in the range 30 to 100 kg/m³, preferably in the range 35 to 90 kg/m³. It can be at least 45kg/m3.

The mineral wool growth substrate comprises a binder, usually an organic binder, which is generally heat-curable. The growth substrate is preferably a coherent matrix of mineral fibres connected by cured binder (eg, particles of binder at intersections of the fibres). The invention is particularly valuable when the binder is an organic hydrophobic binder, and in particular when it is a conventional heat-curable (thermosetting), hydrophobic binder of the type which has been used for many years in mineral wool growth substrates (and other mineral wool based products). This has the advantage of convenience and economy. Thus, the binder is preferably a phenol formaldehyde resin or urea formaldehyde resin, in particular phenol urea formaldehyde (PUF) resin.

The binder is generally present in the mineral wool growth substrate in amounts of from 0.1 to 10% based on the substrate, usually 0.5 to 5%, most preferably 1.5 to 5%.

The mineral wool growth substrate also comprises a wetting agent which is an ionic surfactant.

Preferably it is an anionic surfactant. Suitable anionic surfactants include salts (including, for example, sodium, potassium, ammonium and substituted ammonium salts such as mono-,di-and triethanolamine salts) of the anionic sulphate, sulphonate, carboxylate and sarcosinate surfactants. Other anionic surfactants include isethionates such as the acyl isethionates, N-acyl taurates, fatty acid amines of methyl tauride, alkyl succinates and sulfosuccinates, mono esters of sulfosuccinates, di-esters of sulfosuccinates and N-acyl sarcosinates. Preferred are anionic sulphate surfactants and anionic sulphonate surfactants, anionic carboxylate surfactants and anionic soap surfactants.

Particularly preferred are the anionic sulphonate surfactants such as linear or branched alkyl benzene sulphonates, alkyl ester sulphonates, primary or secondary alkyene sulphonates, olefin sulphonates, sulphonated polycarboxylic acids, alkyl glycerol sulphonates, fatty acyl glycerol sulphonates, fatty oleyl glycerol sulphonates and mixtures thereof.

Most preferably the anionic surfactant is a linear alkyl benzene sulphonate in which the alkyl chain has from 5 to 20 carbon atoms. The sodium and potassium salts are preferred. This type of surfactant provides particularly beneficial water distribution and also provides excellent re-saturation and water retention properties and does not lead to foaming problems in the irrigation water.

Preferably the alkyl chain length is in the range 8 to 16, and more preferably at least 90% of the chains are in the range 10 to 13 and more preferably at least 90% (by weight) are in the range 10 to 12.

Alternatively, the ionic surfactant may be cationic or zwitterionic. Examples of cationic surfactants include quaternary ammonium surfactants. These can, for instance, be selected from mono C6 to mono C16, preferably C6 to C10 N-alkyl or alkenyl ammonium surfactants wherein the remaining N positions are substituted by groups such as methyl, hydroxyethyl and hydroxypropyl.

Suitable zwitterionic surfactants include derivatives of secondary and tertiary amines, derivatives of heterocyclic secondary and tertiary amines, or derivatives of quaternary ammonium, quaternary phosphonium or tertiary sulphonium compounds. Betaine and sultaine surfactants are examples of zwitterionic surfactants.

The ionic surfactant is present in the growth substrate in an amount of from 0.05 to 0.75% (by weight), based on growth substrate, more preferably 0.075 to 0.5%, in particular, 0.1 to 0.2%.

We find that below the defined levels the wetting effect is insufficient. It is believed that in the case of ionic surfactants such as LAS the surfactant forms monolayers on the surfaces of the fibres, and that it is important that more than one overlaid monolayer is present, in order to provide a robust product with high homogeneity. If the level of wetting agent is too low then the required structure on a micro scale is not obtained.

It is desirable to have from 5 to 20 monolayers (averaged over the entire product), preferably from 7 to 15.

If the level of wetting agent is above the defined levels then the number of monolayers becomes too high, leading to problems of physical properties of the product being inferior, and high risk of phytotoxicity of the product. There is a risk that the wetting agent will begin to form a coating on the plant roots, preventing uptake of nutrients. This is the likely effect of the level of 3% mentioned in EP-A-1226749, if applied with ionic surfactant.

Preferably the amount (by weight) of ionic surfactant based on the weight of binder (dry matter) is in the range 0.01 to 5%, preferably 0.5 to 4%.

It is preferred that there is substantially no other wetting agent than the ionic surfactant, and it is particularly preferred that there is no substantially other wetting agent than linear alkyl benzene sulphonate. Thus, levels of such other materials are preferably below 0.1 % (by weight) in particular below 0.01 %, based on the growth substrate.

The growth substrate may contain other types of conventional additives in addition to binder and wetting agent, for instance salts such as ammonium sulphate and adhesion promoters such as silanes.

The growth substrate of the invention may be used in methods of growing plants. In such methods, plants are positioned in a unit of mineral wool growth substrate for growth. One plant, or more than one, may be positioned in a single unit of mineral wool growth substrate.

The method may be any method of growing plants in a mineral wool substrate. These applications include germination of seedlings (usually in small plugs followed by transplantation into larger blocks), propagation of cuttings, growth of plants in containers, freely planted cultures and sucking beds.

In all cases, it is a particular benefit of the growth substrates defined that they can be re-used. Thus, in the invention it is also possible to position the plants in a unit of mineral wool growth substrate which has previously been used and wetted and allowed to dry out. This is particularly valuable for multi-crop use and use of the same substrate for a long period of time, eg one or more, even 2 or more, years.

The growth substrate is in the form of a single unit or a number of discrete units. The mineral wool growth substrate may be in any integral form, for instance in the form of small blocks or plugs, larger blocks, or an extensive mat/slab/blanket, provided that the height is as required by the first aspect of the invention. Other dimensions may be selected as convenient. The block is generally a coherent matrix of mineral wool fibres, but can be formed by granulating a slab of mineral wool and consolidating the granulated material.

Each unit may have a variety of height, width and length dimensions, as conventional.

During the method the plants are irrigated with water and nutrients, as is conventional. The use of ionic surfactant has the advantage that loss of the wetting agent to the irrigation water is minimal, allowing for a system in which there is essentially no anti foam material in the irrigation water.

In use we find that the mineral wool growth substrate exhibits a particularly desirable distribution of water over height. This distribution can be determined by comparing the water content at the top of the substrate with the water content at the bottom of the substrate. Each of these values are usually expressed as percentages and the difference between them is preferably less than 40%, more preferably less than 35% and in particular less than 30%. In some cases a negative value can be achieved, namely there is a greater concentration at the top than at the bottom, eg up to -10%.

The mineral wool growth substrate can be made in conventional manner. That is, it is made by providing solid mineral raw materials, melting these raw materials to form a melt and forming the melt into fibres, collecting the fibres as a primary web and consolidating the collected fibres. A binder is, conventionally, usually added by spraying on to the fibres after formation but before collection and consolidation. In the invention the binder is usually a curable binder and is normally cured as the consolidated product passes through a curing oven. After this the product is cut into the desired sizes.

Curing is normally in an oven at a temperature of around 200 degrees C or greater, often at least 220 degrees C, for instance in the range of 220 to 260 degrees C. Examples of curing temperatures are 225, 240 and 250 degrees C

Binder is usually applied to the fibres by spraying of a solution of the binder components in finely divided/atomised form.

The wetting agent is also generally applied to the fibres as an atomise/finely divided spray, usually as a solution or dispersion, but can be in neat form if the wetting agent is itself a liquid.

The wetting agent and binder may be applied to the fibres simultaneously or separately. If they are applied simultaneously, this may be as a result of spraying onto the fibres a single liquid composition which comprises both binder components and wetting agent. Such a composition may, for instance, be produced before transport of the composition to the fibre production facility. Alternatively, the materials may be blended at the fibre production facility. As a further alternative they may be blended in-line just before spraying takes place.

Alternatively, the wetting agent and binder components may be applied separately but simultaneously to the fibres.

In general, application is usually by a spray into the spinning chamber into a cloud of the just-formed fibres. This results in distribution of the wetting agent on the surfaces of the fibres.

One particular advantage of using ionic surfactant, in particular anionic surfactant such as LAS, is that it appears to be stable to the curing conditions to which the growth substrate material is normally subject during production. Thus it can be sprayed onto the fibres together with other additives such as binder. Preferably the ionic surfactant is applied to the fibres after they are formed but before they are collected. This is usually by spraying in the spinning chamber. Alternatively, the ionic surfactant can be applied after the fibres are collected as a primary web and before they are consolidated. It is also possible in some circumstances to apply the ionic surfactant after consolidation but before curing and in some cases the ionic surfactant can be applied even after curing.

The binder usually requires further additives, such as ammonia, ammonium sulphate and silane. These can be added to the binder before transport and storage, or at the fibre production facility before storage, or in-line shortly before spraying on of the binder to the fibres.

It is possible to apply a polyol to the fibres together with the wetting agent, as described in EP-1226749. This polyol, if used, can be blended with the wetting agent before transport and storage, or at the fibre production facility. Preferred polyols are ethylene glycol, propylene glycol, and trimethylol propane, especially ethylene glycol.

### Examples

Three growth substrate products were compared. One contains hydrophobic binder and non-ionic surfactant (product A). Another contains a hydrophilic binder and no wetting agent (product B). The third (product C) is a product for use in the invention and contains 3% hydrophobic binder and 0.15% linear alkyl benzene sulphonate anionic surfactant (weight percentages based on growth substrate).

Properties of the products were as follows:

| | **Product A** | **Product B** | **Product C** |
|---|---|---|---|
| Density (kg/m³ | 46 | 45 | 46 |
| | | | |
| Ignition Loss (%) | 2.8 | 2.6 | 2.8 |
| Initial Saturation (%; V\V) | 83 | 90 | 89 |
| WC-10cm(%;V\V) | 38 | 67 | 69 |
| Re-Saturation (50%; + 5mm:% V\V) | 58 | 64 | 66 |
| WC Top (%) | 26 | 32 | 30 |
| WC Bottom (%) | 70 | 60 | 59 |
| WC Top-Bottom (%) | 44 | 28 | 29 |

The various properties were measured as follows:

### Initial saturation.

The sample is weighed dry and its dimensions in dry form also measured.
The sample of substrate is saturated with water by putting the sample on the water surface and letting the sample soak itself with water.
When it is lying at the bottom of the water container, the sample is removed gently and is put on a grid for draining.
After 30 minutes of draining the sample with the water is weighed. Based upon the measured weight dry and the measured dimensions of the sample, the initial saturation is calculated on a volume basis.
For each measurement, 5 samples are taken from a batch.

### Water retention.

The method is described in EP-A-310501.
In principle, the samples are saturated with water and are then put on a sand bed. Using as a reference the middle of the sample, the sample is then put via the sand bed on an underpressure of 10 cm water column.
After 4 hours, the sample is taken from the sand bed and weighed. On basis of the measured dry and wet weight and the measured dimensions of the samples, the water content on volume basis is calculated.

### Water distribution over height

The samples are saturated with water and then drained until the samples have a total water content of 50% ± 2%. Then the water content is measured at different heights of the samples with a water content meter.

### Re-saturation.

Samples are saturated with water and then drained until the samples have a total water content of 50% ± 2%. Then the samples are placed in a container in which the height of the water is 5 mm. After 4 hours the samples are taken out of the container and weighed.
The weight after 4 hours is measured and this result together with the dimensions of the sample gives a water content on volume basis after 4 hours. This is then a measure for the re-saturation capacity.

It can be seen that Product C according to the invention had initial saturation, water retention and re-saturation, as well as water distribution characteristics, equally as good as the more expensive product B containing hydrophilic binder and consistently improved in comparison with the standard product A comprising non-ionic surfactant.

## Claims

1. A mineral wool growth substrate comprising binder and wetting agent,
**characterised in that**
the wetting agent comprises ionic surfactant and is present in an amount of from 0.05 to 0.75%, by weight based on growth substrate.

2. A growth substrate according to claim 1 in which the wetting agent comprises anionic surfactant.

3. A growth substrate according to claim 2 in which the wetting agent comprises linear alkyl benzene sulphonate anionic surfactant.

4. A growth substrate according to any preceding claim in which the mineral wool growth substrate comprises no wetting agent other than the ionic surfactant.

5. A growth substrate according to any preceding claim in which the amount of ionic surfactant is 0.1 to 0.2%, by weight based on weight of mineral wool growth substrate.

6. A growth substrate according to any preceding claim in which the binder is a hydrophobic organic binder.

7. A method of growth plants comprising providing at least one block of mineral wool substrate as defined in any preceding claim and positioning one or more plants for growth in the block of growth substrate.

8. A process of producing a mineral wool growth substrate according to any of claims 1 to 6 comprising:
providing solid mineral raw materials,
melting the raw materials to form a melt,
forming the melt into fibres,
collecting the fibres as a primary web,
consolidating the primary web,
applying binder to the fibres after formation and before consolidation,
subjecting the primary web to elevated temperature in order to cure the binder,
wherein the process comprises applying ionic surfactant to the fibres after formation.
